# EUROPEAN PATENT SPECIFICATION

(11) **EP 3 373 594 B1**
(45) Date of publication and mention of the grant of the patent: **02.09.2020**
(21) Application number: 18151920.8
(22) Date of filing: 16.01.2018
(51) Int. Cl.: H04R 1/28, H04R 1/34, G02B 27/01, H04R 5/033

(54) **HEAD-MOUNTED DISPLAY COMPRISING A STRAP ARM WITH INTEGRATED AUDIO PORT**
AM KOPF MONTIERTE ANZEIGE MIT EINEM RIEMENARM MIT INTEGRIERTEM AUDIOAUSGANG
VISIOCASQUE AVEC UN BRAS DE SANGLE AVEC UN PORT AUDIO INTÉGRÉ

(30) Priority: 05.03.2017 US 201762467135 P; 17.08.2017 US 201715680086; 28.12.2017 WO PCT/US2017/068817
(43) Date of publication of application: 12.09.2018
(73) Proprietor: Facebook Technologies, LLC, Menlo Park, CA 94025 (US)
(72) Inventor: BRISTOL, Peter Wesley, Menlo Park, CA 94025 (US); DALLMEYER, Scott Andrew, Menlo Park, CA 94025 (US); MORRIS, Quintin, Menlo Park, CA 94025 (US); DEVOE, Matthew James, Menlo Park, CA 94025 (US); TAO, David, Menlo Park, CA 94025 (US)
(74) Representative: Murgitroyd & Company

(56) References cited:
- US-A- 5 272 757
- US-A1- 2004 037 444
- US-A1- 2010 079 356
- US-A1- 2011 102 734
- US-A1- 2014 176 398
- US-A1- 2016 363 771
- US-B1- 6 369 952

## Description

### BACKGROUND

### Field of the Disclosure

The present disclosure generally relates to a strap system for a head-mounted display, and specifically to a strap system with integrated audio ports for transmitting sound.

### Description of the Related Arts

Head-mounted displays (HMDs) have wide applications in various fields, including engineering design, medical surgery practice, military simulated practice, and video gaming. For example, a user wears an HMD while playing video games so that the user can have a more interactive experience in a virtual environment. As opposed to other types of display devices, an HMD is worn directly over a user's head. The HMD may directly interface with a user's face while exerting pressure onto the user's head due to its weight. Hence, a strap system is used in the HMD to secure the HMD securely to the user's head in a comfortable manner.

Audio systems for HMDs are also subject to constraints often not encountered in other devices. Ear buds or ear phones of HMDs impose inconvenience because of lines to transmit signals to the ear buds or ear phones. Moreover, when the HMDs are used by multiple users, sharing of ear buds or ear phones may cause hygiene issues.
US 2016/363771 A1 discloses a strap system for a head-mounted display.
US 2011/102734 A1 discloses eyeglasses with a speaker at least partially embedded in one of the temples of the glasses. The glasses further include a tube, such as a plastic tube, extending from a speaker. The tube serves to guide sound generated by the speaker to one of the ears of the user.

### SUMMARY

Embodiments relate to a head-mounted display (HMD) as defined in appended claim 1.

In an embodiment according to the invention, a head-mounted display (HMD) comprises:
a front rigid body;
a strap arm attached to a strap that secures the front rigid body to a user's head, the strap arm including:
   a body portion defining a boss at a side of the body portion, the boss having an aperture, the boss rotatably connecting the strap arm to the front rigid body, the body portion further defining an audio passage to transmit sound and an audio port to output the sound, the audio passage being defined along the body portion between the aperture of the boss and the audio port; and
   a speaker positioned to emit the sound through the audio passage and to the audio port.

The strap arm further includes a back volume unit including:
an enclosure portion; and
a cylindrical column inserted through the aperture of the boss, the cylindrical column defining a second aperture, the speaker being positioned within the second aperture with a back side of the speaker facing an interior surface of the enclosure portion to define a back volume between the interior surface and the back side of the speaker,
at least a portion of the sound from the speaker being transmitted from the back volume through the audio passage.

The speaker may be positioned within the aperture of the boss of the body portion and the front side of the speaker may face toward the audio passage.

The boss may extend through a third aperture of the front rigid body to rotatably connect the strap arm to the front rigid body; and the enclosure portion may be positioned on a first side of the third aperture within the front rigid body and the body portion of the strap arm may be positioned on a second side of the third aperture exterior to the front rigid body.

The strap arm may include: a rear loop at one end of the body portion, and a front loop at the other end of the body portion, the rear loop and the front loop receiving the strap.

The body portion may include a support surface facing the strap inserted through the front loop and the rear loop.

The audio port may be formed on the side of the body portion including the boss and at a location closer to the rear loop than the front loop.

The body portion may include: a base portion; and a cover portion secured to the base portion, the audio passage being defined between the base portion and the cover portion.

The body portion may define: a second audio passage; and a center rib separating the audio passage and the second audio passage.

### BRIEF DESCRIPTION OF THE DRAWINGS

The teachings of the embodiments can be readily understood by considering the following detailed description in conjunction with the accompanying drawings.
- Figure (FIG.) 1: is an example perspective view of a HMD attached with a strap system, in accordance with an embodiment.
- FIGs. 2 through 4: are perspective views of the strap arm of the HMD.
- FIG. 5A: is front view of a base portion of the strap arm.
- FIG. 5B: is a perspective view of the base portion of the strap arm.
- FIG. 6: is an exploded perspective view of the strap arm.
- FIG. 7: is a cross-sectional view of the strap arm.

The figures depict various embodiments for purposes of illustration only.

### DETAILED DESCRIPTION

In the following description of embodiments, numerous specific details are set forth in order to provide more thorough understanding. However, note that the embodiments may be practiced without one or more of these specific details. In other instances, well-known features have not been described in detail to avoid unnecessarily complicating the description.

Embodiments are described herein with reference to the figures where like reference numbers indicate identical or functionally similar elements. Also in the figures, the left most digits of each reference number corresponds to the figure in which the reference number is first used.

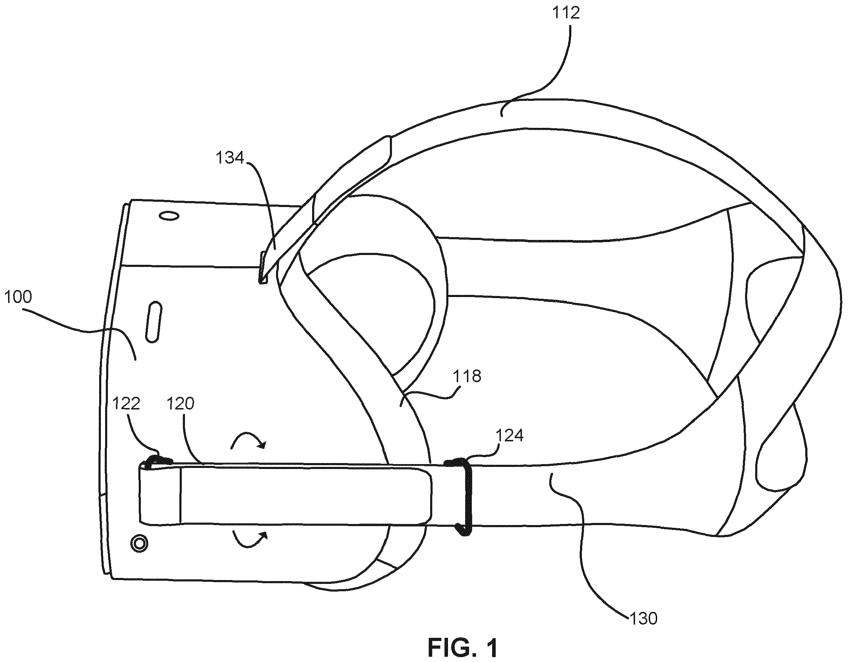

FIG. 1 is an example perspective view of a HMD attached with a strap system, in accordance with an embodiment. The HMD includes, among other components, a front rigid body 100 (or "body 100") and a facial interface 118 attached to the body 100. The body 100 includes various components such as a display panel, optical elements and circuits (not shown). The facial interface 118 is made of a material softer than the body 100 and comes into contact with a user's face when the HMD is worn by the user.

The body 100 is attached with a strap 130 at both sides (i.e., the left side and the right side). As shown in FIG. 1, the left portion of the strap 130 (or "left strap 130") is fixed to a front loop 122 and a rear loop 124 of a left strap arm 120. The left strap arm 120 is fixed in a rotatable manner to the body 100 in directions as shown by arrows. In order to fix the strap 130 to the strap arm 120, the left strap 130 is first inserted through loops 124, then through loop 122, and then folded back onto itself as shown in FIG. 1. The overlapping of the left strap 130 can be adjusted to control the length of the left strap 130. The back side of the left strap 130 and the front side of the left strap 130 has Velcro attached, and hence, the end of the strap 130 is securely fixed once the user presses the back side of the left strap 130 onto the front side of the left strap 130. Other types of adjustable mechanical attachment between a strap and strap arm may also be used, such as a buckle attachment. By controlling the length of the left and right straps as well as the tilting angle of the HMD, the user can comfortably wear the HMD.

The right portion of the strap 130 (or "right strap") is attached to the right side of the HMD using a right strap arm (not shown) in the same way.

An aperture 134 is formed in the body 100 to receive an end of a center bridge 112 of the strap 130. The end of the center bridge 112 is inserted below an edge of the body 100 and extends through the aperture 134. The end of the center bridge 112 extending from the aperture 134 folds back onto another portion of the center bridge 112 and overlaps with the other portion of the center bridge 112 to secure the center bridge 112 to the body 100. The center bridge 112 may include Velcro (or some other type of attachment) on the upper surface and lower surface of the center bridge 112 so that the end portion of the center bridge 112 is secured onto the other portion of the center bridge 112 when pressed against the other portion of the center bridge 112. The user may adjust the length of the center bridge 112 by detaching the end portion of the center bridge 112 from the other portion of the center bridge 112 and changing the location of the center bridge 112 where the end portion of the center bridge 112 is attached. By adjusting the length of the center bridge 112, the user can adjust the orientation of the strap arm 120 with respect to the body 100 to direct sound through the strap arm 120 to the user's ear.

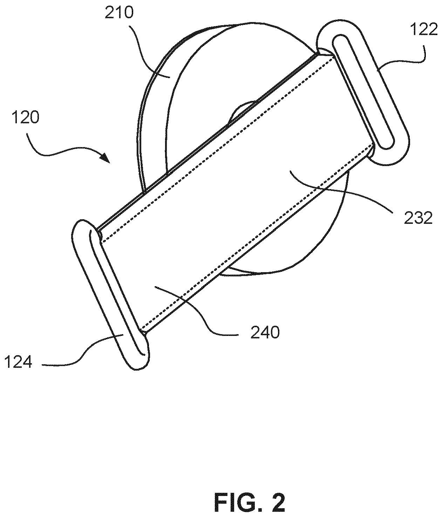

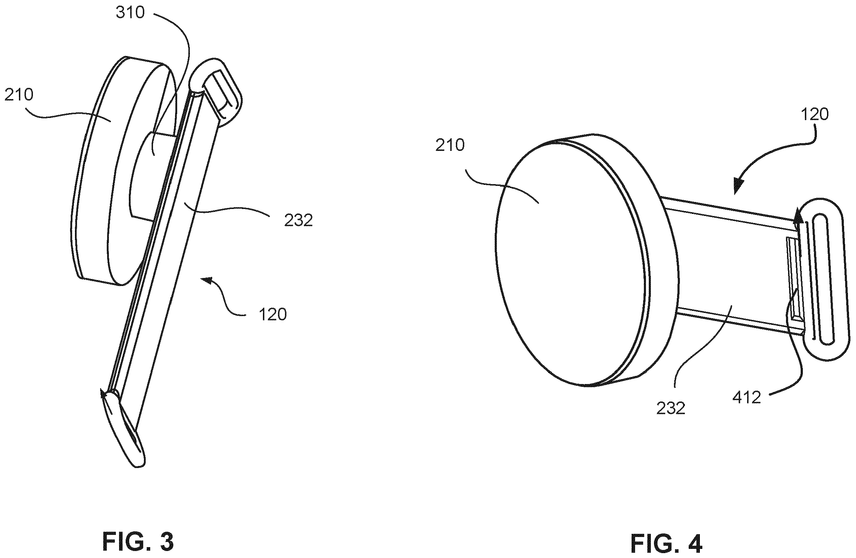

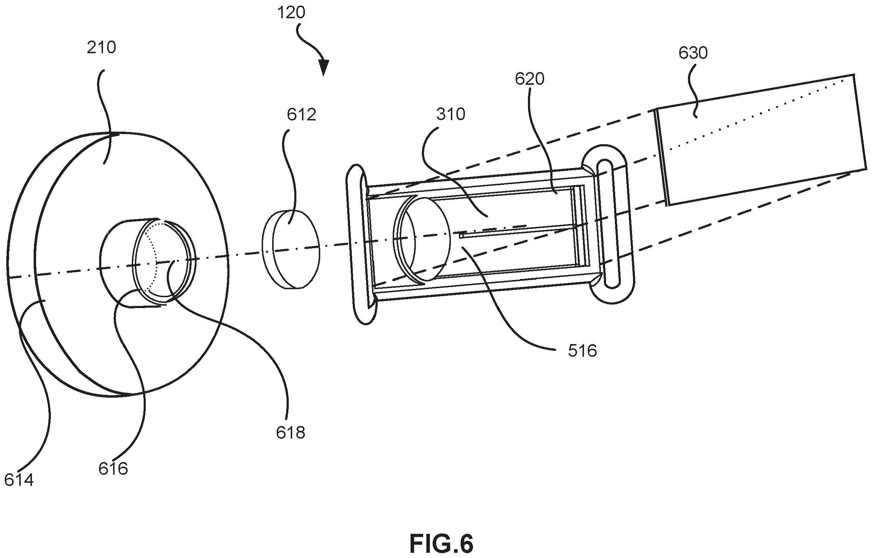

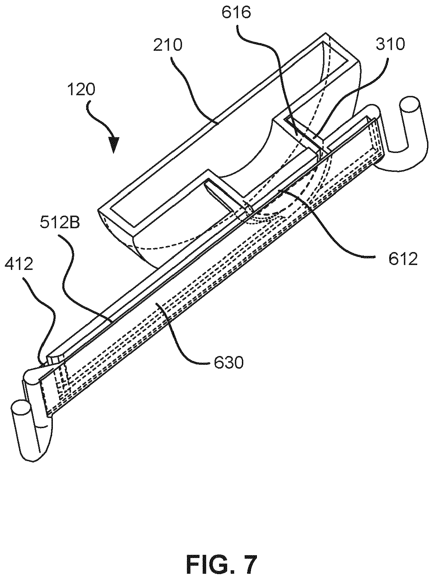

FIGs. 2 through 4 are perspective views of the strap arm 120 of the HMD. The strap arm 120 has a body portion 232 defined between the front loop 122 and the rear loop 124, a back volume unit 210, and a speaker 612. The speaker 612 is positioned within the body portion 232 and/or back volume unit 210, as shown in FIGS. 6 and 7. The body portion 232 includes a support surface 240 that supports a portion of the strap 130 inserted through the loops 122, 124 and the portion of the strap 130 folded backwards from loop 122. The support surface 240 functions as surface onto which the folded back portion of the strap 130 and the portion of the strap 130 extending between the loops 122, 124 can be pressed by the use to secure the folded back portion onto the portion of the strap 130 between the loops 122, 124.

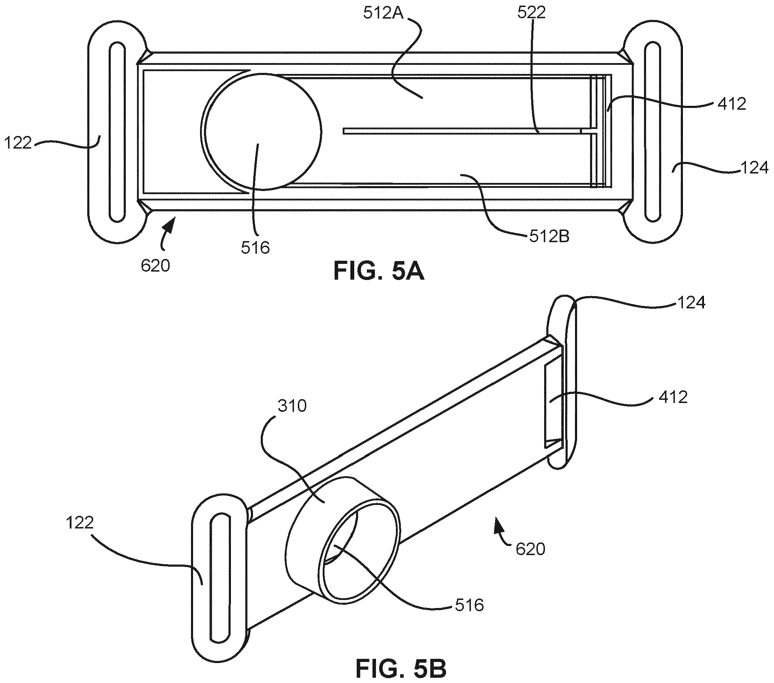

The back volume unit 210 includes an enclosure portion 614 and a cylindrical column 616 that protrudes from the enclosure portion 614 (e.g., as shown in FIG. 6). The enclosure portion 614 that provides a cavity from which the sound generated from a speaker 612 can be reverberated towards audio passages 512A, 512B (e.g., as shown in FIG. 5A) of the strap arm 120. The back volume unit 210 enhances the quality and/or volume of the sound provided to the user via the audio port 412. In some embodiments, the enclosure portion 614 has a cylindrical shape defining a diameter that is larger than a diameter defined by the cylindrical column.

The strap arm 120 includes a cylindrical boss 310 that is received in an aperture formed at a side of the body 100 of the HMD. The strap arm 120 can rotate relative to the body 100 about the center of the boss 310. The cylindrical boss 310 of the strap arm 120 defines an aperture 516 that holds the cylindrical column 616 of the back volume unit 210.

The speaker 612 is positioned to emit sound through the audio passages 512A, 512B and to the audio port 412. In some embodiments, the speaker 612 is inserted into the cylindrical column 616, as shown in FIG. 7. In particular, the speaker 612 is positioned within an aperture 618 defined by the cylindrical column 616 of the back volume unit 210, with the cylindrical column 616 being positioned within the aperture 516 defined by the boss 310. The speaker 612 is positioned within the aperture 618 with a back side of the speaker 612 facing an interior surface of the enclosure portion 614 to define a back volume between the interior surface and the back side of the speaker 612 for enhancing the sound emitted from the speaker. At least a portion of the sound from the speaker 612 is transmitted from the back volume through the audio passages 512A, 512B, and output at the audio port 412. The front side of the speaker 612 faces a volume within the strap arm 120 defined by the audio passages 512A and 512B.

The cylindrical boss 310 extends through an aperture of the body 100 to attach the strap arm 120 to the body 100. The enclosure portion 614 of the back volume unit 210 is positioned on a first side of the aperture of the body 100 within the body 100, and the body portion 232 of the strap arm 120 (including audio passages 512A, 512B and the audio port 412) is positioned on a second side of the aperture of the body 100 exterior to the body 100.

The body portion 232 of the strap arm 120 may include a base portion 620 and a cover portion 630. FIG. 5A is a front view of the base portion 620 of the strap arm 120. The base portion 620 includes loops 122, 124 and has a body portion 232 with the audio passages 512A, 512B that extend along the body portion 232 from the aperture 516 of the boss 310 to the audio port 412. The audio passages 512A, 512B are separated by a center rib 522. In some embodiments, the audio passages 512A, 512B are defined by recesses within the base portion 620 separated by a protrusion defining the center rib 522. When the base portion 620 and the cover portion 630 are joined, the recesses within the base portion 620 between the center rib 522 results in the audio passages 512A, 512B being defined between the base portion 620 and the cover portion 630.

The sound generated by the speaker 612 travels through the audio passages 512A, 512B to the audio port 412. Furthermore, some or all of the sound generated by speaker 612 may be enhanced by the back volume unit 210, and then directed by the trap arm 120 through the audio passages 512A, 512B to the audio port 412. The audio port 412 is placed and oriented so that that the sound from the audio port 412 is forwarded or directed toward a user's ear when the user wears the HMD. The body portion 232 of the base portion 620 is covered by the cover portion 630, as shown in FIG. 6.

FIG. 5B is a perspective view of the base portion 620 of the strap arm 120, in accordance with an embodiment. The audio port 412 and the boss 310 are formed on the same side of the body portion 232 to direct sound toward the user's ear. When the HMD is worn by the user, the audio port 412 can be positioned close to the user's ear. The audio port 412 is a carved out section of the strap arm 120 that is connected to the audio passages 512A, 512B to transmit the sound in a backward direction (e.g., from the perspective of the user) to the user's ear.

FIG. 6 is an exploded perspective view of the strap arm 120, in accordance with an embodiment. The speaker 612 is inserted into the cylindrical column 616, as discussed above. Signal lines (not shown) of the speaker 612 may extend from an audio circuit in the HMD via the back volume unit 210 or through a gap between the cylindrical column 616 and the boss 310. In some embodiments, the back volume unit 210 is formed from two separate clamshell portions that are joined to form a sealed cavity for the back volume. The signal lines (e.g., wires) extend between the interface of the joined portions, with the interface and wires forming a seal to maintain the sealed cavity for the back volume.

The cylindrical column 616 of the back volume unit 210 is inserted into the aperture 516 of the boss 310 with the speaker 612 mounted in the aperture 618 of the cylindrical column 616. The cover portion 630 is placed onto the base portion 620 to enclose the audio passages 512A, 512B to transmit the sound to generated by the speaker 612 to the audio port 412.

FIG. 7 is a cross-sectional view of the strap arm 120 in an assembled state, in accordance with an embodiment. The speaker 612 is mounted in the cylindrical column 616 and has its front side facing towards the audio passages 512A, 512B. As shown in FIG. 7, a front side (or membrane) of the speaker 612 is generally aligned in parallel to a rear interior surface portion of the back volume unit 210 and the body portion 232.

The foregoing description of the embodiments has been presented for the purpose of illustration; it is not intended to be exhaustive or to limit the embodiments to the precise forms disclosed.

Finally, the language used in the specification has been principally selected for readability and instructional purposes, and it may not have been selected to delineate or circumscribe the inventive subject matter. It is therefore intended that the scope be limited not by this detailed description, but rather by the appended claims. Accordingly, the disclosure of the embodiments is intended to be illustrative, but not limiting, of the scope, which is set forth in the following claims.

## Claims

1. A head-mounted display (HMD), comprising:
a front rigid body (100);
a strap arm (120) attached to a strap (130) that secures the front rigid body (100) to a user's head, the strap arm (120) including:
a body portion (232) defining a boss (310) at a side of the body portion (232), the boss (310) having an aperture (516), the boss (310) rotatably connecting the strap arm (120) to the front rigid body (100), the body portion (232) further defining an audio passage (512A, 512B) to transmit sound and an audio port (412) to output the sound, the audio passage (512A, 512B) being defined along the body portion (232) between the aperture (516) of the boss (310) and the audio port (412); the strap arm (120) further including:
a speaker (612) positioned to emit the sound through the audio passage (512A, 512B) and to the audio port (412); and
a back volume unit (210) including:
an enclosure portion (614); **characterized in that** the back volume unit (210) further includes a cylindrical column (616) inserted through the aperture (516) of the boss (310), the cylindrical column (616) defining a second aperture, the speaker being positioned within the second aperture (618) with a back side of the speaker (612) facing an interior surface of the enclosure portion (614) to define a back volume between the interior surface and the back side of the speaker (612), at least a portion of the sound from the speaker (612) being transmitted from the back volume through the audio passage (512A, 512B).

2. The HMD of claim 1, wherein
the back volume enhances the sound emitted from the speaker (612).

3. The HMD of any of claim 1 or 2, wherein the speaker (612) is positioned within the aperture (516) of the boss (310) of the body portion (232) and the front side of the speaker (612) faces toward the audio passage (512A, 512B).

4. The HMD of any of claims 1 to 3, wherein:
the boss (310) extends through a third aperture of the front rigid body (100) to rotatably connect the strap arm (120) to the front rigid body (100); and
the enclosure portion (614) is positioned on a first side of the third aperture within the front rigid body (100) and the body portion (232) of the strap arm (120) is positioned on a second side of the third aperture exterior to the front rigid body (100).

5. The HMD of any of claims 1 to 4, wherein the strap arm further includes:
a rear loop (124) at one end of the body portion (232), and
a front loop (122) at the other end of the body portion (232), the rear loop (124) and the front loop (122) receiving the strap (130).

6. The HMD of any of claims 1 to 5, wherein the body portion (232) includes:
a base portion (620); and
a cover portion (630) secured to the base portion (620), the audio passage (512A, 512B) being defined between the base portion (620) and the cover portion (630).

7. The HMD of any of claims 1 to 6, wherein the body portion (232) further defines:
a second audio passage (512B) between the aperture (516) of the boss (310) and the audio port (412); and
a center rib (522) separating the audio passage (512A) and the second audio passage (512B).

8. The HMD of claim 5, wherein the body portion (232) includes a support surface facing the strap (130), the strap (130) being inserted through the front loop (122) and the rear loop (124).

9. The HMD of claim 5, wherein the audio port (412) is formed on the side of the body portion (232) including the boss (310) and at a location closer to the rear loop (124) than the front loop (122).

## Patentansprüche

1. Eine am Kopf montierte Anzeige (HMD, Head Mounted Display), die Folgendes beinhaltet:
einen vorderen unbiegsamen Körper (100);
einen Riemenarm (120), der an einem Riemen (130) angebracht ist, der den vorderen unbiegsamen Körper (100) an dem Kopf eines Benutzers befestigt, wobei der Riemenarm (120) Folgendes umfasst:
einen Körperteil (232), der einen runden Vorsprung (310) an einer Seite des Körperteils (232) definiert, wobei der runde Vorsprung (310) eine Öffnung (516) aufweist, wobei der runde Vorsprung (310) den Riemenarm (120) mit dem vorderen unbiegsamen Körper (100) drehbar verbindet, wobei der Körperteil (232) ferner eine Audiopassage (512A, 512B), um Ton zu übertragen, und einen Audioausgang (412), um den Ton auszugeben, definiert, wobei die Audiopassage (512A, 512B) entlang des Körperteils (232) zwischen der Öffnung (516) des runden Vorsprungs (310) und dem Audioausgang (412) definiert ist;
wobei der Riemenarm (120) ferner Folgendes umfasst:
einen Lautsprecher (612), der positioniert ist, um den Ton durch die Audiopassage (512A, 512B) und zu dem Audioausgang (412) abzugeben; und
eine Rückvolumeneinheit (210), die Folgendes umfasst:
einen Umhausungsteil (614);
**dadurch gekennzeichnet, dass** die Rückvolumeneinheit (210) ferner Folgendes umfasst:
einen zylinderförmigen Ständer (616), der durch die Öffnung (516) des runden Vorsprungs (310) eingeführt wird, wobei der zylinderförmige Ständer (616) eine zweite Öffnung definiert, wobei der Lautsprecher innerhalb der zweiten Öffnung (618) positioniert ist, wobei eine Rückseite des Lautsprechers (612) einer Innenfläche des Umhausungsteils (614) gegenüberliegt, um zwischen der Innenfläche und der Rückseite des Lautsprechers (612) ein Rückvolumen zu definieren, wobei mindestens ein Teil des Tons aus dem Lautsprecher (612) von dem Rückvolumen durch die Audiopassage (512A, 512B) übertragen wird.

2. HMD gemäß Anspruch 1, wobei das Rückvolumen den von dem Lautsprecher (612) abgegebenen Ton verstärkt.

3. HMD gemäß einem der Ansprüche 1 oder 2, wobei der Lautsprecher (612) innerhalb der Öffnung (516) des runden Vorsprungs (310) des Körperteils (232) positioniert ist und die Vorderseite des Lautsprechers (612) der Audiopassage (512A, 512B) gegenüberliegt.

4. HMD gemäß einem der Ansprüche 1 bis 3, wobei:
sich der runde Vorsprung (310) durch eine dritte Öffnung des vorderen unbiegsamen Körpers (100) erstreckt, um den Riemenarm (120) mit dem vorderen unbiegsamen Körper (100) drehbar zu verbinden; und
der Umhausungsteil (614) auf einer ersten Seite der dritten Öffnung innerhalb des vorderen unbiegsamen Körpers (100) positioniert ist und der Körperteil (232) des Riemenarms (120) auf einer zweiten Seite der dritten Öffnung außerhalb des vorderen unbiegsamen Körpers (100) positioniert ist.

5. HMD gemäß einem der Ansprüche 1 bis 4, wobei der Riemenarm ferner Folgendes umfasst:
eine hintere Schlaufe (124) an einem Ende des Körperteils (232) und
eine vordere Schlaufe (122) an dem anderen Ende des Körperteils (232), wobei die hintere Schlaufe (124) und die vordere Schlaufe (122) den Riemen (130) aufnehmen.

6. HMD gemäß einem der Ansprüche 1 bis 5, wobei der Körperteil (232) Folgendes umfasst:
einen Basisteil (620); und
einen Abdeckungsteil (630), der an dem Basisteil (620) befestigt ist, wobei die Audiopassage (512A, 512B) zwischen dem Basisteil (620) und dem Abdeckungsteil (630) definiert ist.

7. HMD gemäß einem der Ansprüche 1 bis 6, wobei der Körperteil (232) ferner Folgendes definiert:
eine zweite Audiopassage (512B) zwischen der Öffnung (516) des runden Vorsprungs (310) und dem Audioausgang (412); und
eine zentrale Rippe (522), die die Audiopassage (512A) und die zweite Audiopassage (512B) trennt.

8. HMD gemäß Anspruch 5, wobei der Körperteil (232) eine Stützfläche umfasst, die dem Riemen (130) gegenüberliegt, wobei der Riemen (130) durch die vordere Schlaufe (122) und die hintere Schlaufe (124) eingeführt wird.

9. HMD gemäß Anspruch 5, wobei der Audioausgang (412) auf der Seite des Körperteils (232), die den runden Vorsprung (310) umfasst, und an einer Stelle, die näher an der hinteren Schlaufe (124) als an der vorderen Schlaufe (122) liegt, gebildet ist.

## Revendications

1. Un visiocasque (HMD), comprenant :
un corps rigide avant (100) ;
un bras de sangle (120) attaché à une sangle (130) qui assujettit le corps rigide avant (100) sur la tête d'un utilisateur, le bras de sangle (120) incluant :
une portion formant corps (232) définissant une protubérance (310) au niveau d'un côté de la portion formant corps (232), la protubérance (310) ayant une ouverture (516), la protubérance (310) raccordant de façon à pouvoir tourner le bras de sangle (120) au corps rigide avant (100), la portion formant corps (232) définissant en outre un passage audio (512A, 512B) afin de transmettre du son et un port audio (412) afin de sortir le son, le passage audio (512A, 512B) étant défini le long de la portion formant corps (232) entre l'ouverture (516) de la protubérance (310) et le port audio (412) ;
le bras de sangle (120) incluant en outre :
un haut-parleur (612) positionné afin d'émettre le son à travers le passage audio (512A, 512B) et jusqu'au port audio (412) ; et
une unité de volume arrière (210) incluant :
une portion formant enceinte (614) ;
**caractérisé en ce que** l'unité de volume arrière (210) inclut en outre une colonne cylindrique (616) insérée à travers l'ouverture (516) de la protubérance (310), la colonne cylindrique (616) définissant une deuxième ouverture, le haut-parleur étant positionné au sein de la deuxième ouverture (618), un côté arrière du haut-parleur (612) faisant face à une surface intérieure de la portion formant enceinte (614) afin de définir un volume arrière entre la surface intérieure et le côté arrière du haut-parleur (612), au moins une portion du son provenant du haut-parleur (612) étant transmise depuis le volume arrière à travers le passage audio (512A, 512B).

2. Le HMD de la revendication 1, dans lequel le volume arrière améliore le son émis depuis le haut-parleur (612).

3. Le HMD de n'importe lesquelles de la revendication 1 ou de la revendication 2, dans lequel le haut-parleur (612) est positionné au sein de l'ouverture (516) de la protubérance (310) de la portion formant corps (232) et le côté avant du haut-parleur (612) est tourné vers le passage audio (512A, 512B).

4. Le HMD de n'importe lesquelles des revendications 1 à 3, dans lequel :
la protubérance (310) s'étend à travers une troisième ouverture du corps rigide avant (100) afin de raccorder de façon à pouvoir tourner le bras de sangle (120) au corps rigide avant (100) ; et
la portion formant enceinte (614) est positionnée sur un premier côté de la troisième ouverture au sein du corps rigide avant (100) et la portion formant corps (232) du bras de sangle (120) est positionnée sur un deuxième côté de la troisième ouverture extérieure au corps rigide avant (100).

5. Le HMD de n'importe lesquelles des revendications 1 à 4, dans lequel le bras de sangle inclut en outre :
une boucle arrière (124) au niveau d'une extrémité de la portion formant corps (232), et
une boucle avant (122) au niveau de l'autre extrémité de la portion formant corps (232), la boucle arrière (124) et la boucle avant (122) recevant la sangle (130).

6. Le HMD de n'importe lesquelles des revendications 1 à 5, dans lequel la portion formant corps (232) inclut :
une portion formant base (620) ; et
une portion formant couvercle (630) assujettie sur la portion formant base (620), le passage audio (512A, 512B) étant défini entre la portion formant base (620) et la portion formant couvercle (630).

7. Le HMD de n'importe lesquelles des revendications 1 à 6, dans lequel la portion formant corps (232) définit en outre :
un deuxième passage audio (512B) entre l'ouverture (516) de la protubérance (310) et le port audio (412) ; et
une nervure centrale (522) séparant le passage audio (512A) et le deuxième passage audio (512B).

8. Le HMD de la revendication 5, dans lequel la portion formant corps (232) inclut une surface de soutien faisant face à la sangle (130), la sangle (130) étant insérée à travers la boucle avant (122) et la boucle arrière (124).

9. Le HMD de la revendication 5, dans lequel le port audio (412) est formé sur le côté de la portion formant corps (232) incluant la protubérance (310) et au niveau d'un emplacement plus près de la boucle arrière (124) que de la boucle avant (122).
